## Europäisches Patentamt

## European Patent Office

## Office européen des brevets

(19)

(11) Veröffentlichungsnummer: **0 085 388 B1**

(12) **· EUROPÄISCHE PATENTSCHRIFT**

(45) Veröffentlichungstag der Patentschrift:
02.10.85

(51) Int. Cl.⁴: **B 21 K 1/76,** F 16 D 3/18

(21) Anmeldenummer: **83100671.3**

(22) Anmeldetag: **26.01.83**

(54) Verfahren zur Herstellung einer Metallmuffe aus einem zylindrischen Rohrabschnitt.

(30) Priorität: **02.02.82 DE 3203438**

(43) Veröffentlichungstag der Anmeldung:
**10.08.83 Patentblatt 83/32**

(45) Bekanntmachung des Hinweises auf die Patenterteilung:
**02.10.85 Patentblatt 85/40**

(84) Benannte Vertragsstaaten:
**DE FR GB IT**

(56) Entgegenhaltungen:
**DE - A - 2 702 179
GB - A - 896 283
GB - A - 1 340 486**

(73) Patentinhaber: **MOTOMAK Motorenbau, Maschinen- und Werkzeugfabrik, Konstruktionen GmbH, Ettinger Str. 26, D-8070 Ingolstadt (DE)**

(72) Erfinder: **Schaeffler, Georg, Dr., Flughafenstrasse 11, D-8522 Herzogenaurach (DE)**
Erfinder: **Heyne, Jürgen E., Birkenstrasse 59, D-6600 Saarbrücken (DE)**
Erfinder: **Krost, Manfred, Cusanusstrasse 38, D-6750 Kaiserslautern (DE)**
Erfinder: **Spiess, Karl, Bamberger Strasse 30, D-8522 Herzogenaurach (DE)**

BUNDESDRUCKEREI BERLIN

## Beschreibung

Die Erfindung betrifft ein Verfahren zur Herstellung einer an beiden Enden stirnseitig offenen Muffe, welche an einer Stirnseite wenigstens eine sich über einen Teil der axialen Länge der Muffe erstreckende stirnseitig offene Ausnehmung aufweist, aus einem zylindrischen Rohrabschnitt.

Für derartige Muffen gibt es im Gesamtgebiet der Technik vielfältige Anwendungsmöglichkeiten. Beispielsweise können sie als Kupplungsmuffen für Zahnkupplungen verwendet werden, wenn sie über ihren Umfang mit Ausnehmungen in Art einer Verzahnung versehen sind, in welche entsprechende Vorsprünge eines weiteren Kupplungsteiles eingreifen. Die Herstellung derartiger Muffen ist relativ aufwendig. Zunächst wird aus einem rohrförmigen Rohrteil durch spanabhebende Bearbeitung die Grundform der Muffe hergestellt, worauf durch Fräsen die Verzahnung gebildet wird.

Es ist ein Verfahren zur Herstellung einer Profilhülse bekannt, bei welchem ein Rohrabschnitt über einen als Abbild der Hülseninnenkontur gestalteten Dorn geschoben und radial umlaufend mit axialem Vorschub aufgehämmert oder -gedrückt wird. Dieses Verfahren ist brauchbar insbesondere für sehr lange und relativ dünnwandige Profilhülsen, es erfordert jedoch den zusätzlichen Arbeitsgang des Aufhämmerns oder Aufdrückens, während bei der vorliegenden Erfindung die stirnseitige Ausnehmung in einfacher Weise durch axiale Druckeinwirkung gebildet wird (DE-A-2 702 179).

Es ist auch eine Schmiedevorrichtung bekanntgeworden, bei der durch axiale Druckanwendung Werkstücke mit vorbestimmter Kontur gebildet werden, bei denen jedoch im Gegensatz zur vorliegenden Erfindung keine stirnseitig offenen Ausnehmungen vorgesehen sind (GB-A-1 340 486).

Der Erfindung liegt die Aufgabe zugrunde, ein Verfahren vorzuschlagen, durch welches derartige Metallmuffen aus einem zylindrischen Rohrabschnitt ausschließlich auf spanlosem Weg hergestellt werden, wobei allenfalls noch eine geringfügige spanabhebende Nachbearbeitung erforderlich sein soll.

Diese Aufgabe wird bei vorgenanntem Verfahren gemäß der Erfindung durch die folgenden nacheinander ablaufenden Verfahrensschritte gelöst:

a) Der Rohrabschnitt wird in den kreisringförmigen Hohlraum eines Gesenkes eingelegt, welcher Hohlraum in seiner radialen Erstreckung größer als die Wanddicke des Rohrabschnittes ist,

b) der Rohrabschnitt wird der axialen Druckeinwirkung eines Stempels unterworfen, so daß es sich unter Ausbildung einer mittigen Ausbauchung mit seinem Mittelteil gegen die äußere, und mit seinen Endbereichen gegen die innere Begrenzungswand des Gesenkhohlraumes anlegt,

c) der Rohrabschnitt wird unter weiterer Druckanwendung so gestaucht, daß er den Gesenkhohlraum bis auf eine in der Mitte der Bohrung des Rohrabschnittes umlaufende Vertiefung ausfüllt und

d) anschließend wirkt auf den gestauchten Rohrabschnitt ein zweiter Stempel ein, der stirnseitig den Ausnehmungen entsprechende Profilierungen aufweist, wobei der durch diese Profilierungen verdrängte Werkstoff unter teilweiser Auffüllung der umlaufenden Vertiefung des Rohrabschnittes in diese eintritt.

Die bei derartigen Stauchvorgängen infolge der eintretenden Ausbauchung des Rohrschnittes sich bildende umlaufende Vertiefung in dessen Bohrung, welche an sich als nachteilig angesehen wird, wird gemäß der Erfindung in vorteilhafter Weise dazu benutzt, den bei dem nachfolgenden Verformungsvorgang zur Bildung der Ausnehmungen verdrängten Werkstoff aufzunehmen. Eine bislang als nachteilig empfundene Gegebenheit wird somit zum Vorteil des vorgeschlagenen Herstellverfahrens ausgenutzt. Es ist leicht einzusehen, daß die auf diese Weise ausformbaren Vertiefungen beliebige Gestalt haben können. Es muß sich dabei keinesfalls um die Bildung einer Art Verzahnung handeln, sondern es könnte beispielsweise auch eine umlaufende rillenförmige Vertiefung eingeformt werden, die noch dazu über den Umfang gesehen unterschiedliche Erstreckung, sei es in radialer oder auch in axialer Richtung haben kann. Ein weiterer Vorteil des erfindungsgemäßen Verfahrens kann darin gesehen werden, daß der verwendete Rohrabschnitt eine geringere Wanddicke als die fertige Muffe aufweist, weil dünnwandigere Rohre häufig zu einem günstigeren Kilopreis eingekauft werden können als dickwandigere.

In den Zeichnungen ist das erfindungsgemäße Verfahren anhand eines Ausführungsbeispieles dargestellt. Es zeigen

Fig. 1 bis 4 Längsschnitte durch ein Gesenk mit vier aufeinanderfolgenden Verfahrensschritten und

Fig. 5 eine nach diesem Verfahren hergestellte Kupplungsmuffe in perspektivischer Darstellung.

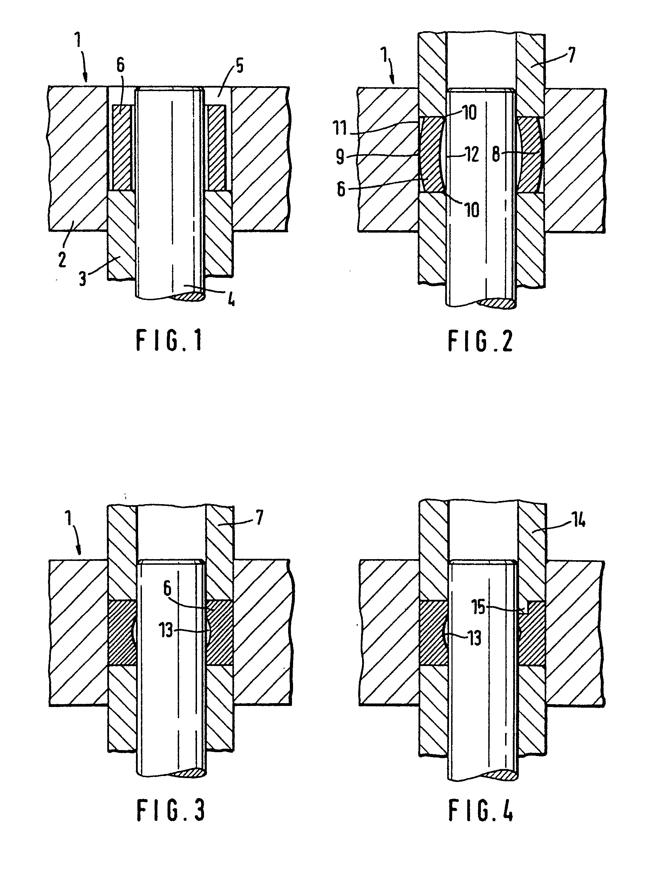

Das in den Fig. 1 bis 4 dargestellte Gesenk 1 besteht aus dem Außenteil 2, dem Ringteil 3 und dem zentralen Bolzen 4. Diese Teile begrenzen den ringförmigen Hohlraum 5, in welchen gemäß Fig. 1 der zylindrische Rohrabschnitt 6 eingelegt wird, welcher eine geringere radiale Erstreckung als der Hohlraum 5 aufweist.

Anschließend wird — wie Fig. 2 zeigt — der kreisförmige Stempel 7 in das Gesenk eingeführt und durch ihn in axialer Richtung Druck auf den Rohrabschnitt 6 ausgeübt, wodurch dieser eine mittige Ausbauchung 8 ausbildet. Dabei legt sich der Rohrabschnitt 6 mit seinem Mittelteil 9 gegen die äußere Begrenzungswand 11 des Hohlraumes 5 und mit seinen Endbereichen 10 gegen die innere Begrenzungswand 12 des Hohlraumes 5 an.

Durch weitere Druckanwendung wird anschließend der Rohrabschnitt 6 so gestaucht, daß er, wie die Fig. 3 zeigt, den Gesenkhohlraum bis auf eine in der Mitte der Bohrung des Rohrabschnittes 6 umlaufende Vertiefung 13 ausfüllt.

Daran anschließend wird der ringförmige Stempel 7 aus dem Gesenk zurückgezogen und an seiner Stelle ein zweiter Stempel 14 eingefügt, der stirnseitig eine Profilierung 15 aufweist, die den gewünschten Ausnehmungen in der zu bildenden Muffe entspricht. Wie der Fig. 4 deutlich zu entnehmen ist, tritt der durch die Profilierung 15 verdrängte Werkstoff unter teilweiser Auffüllung der umlaufenden Vertiefung 13 in diese ein. Während auf der linken Seite der Fig. 4 der Stempel 14 keine Profilierung aufweist, so daß dort die umlaufende Vertiefung 13 erhalten bleibt, ist auf der rechten Seite ersichtlich, daß dort die Vertiefung 13 nahezu vollständig von dem verdrängten Werkstoff aufgefüllt wurde.

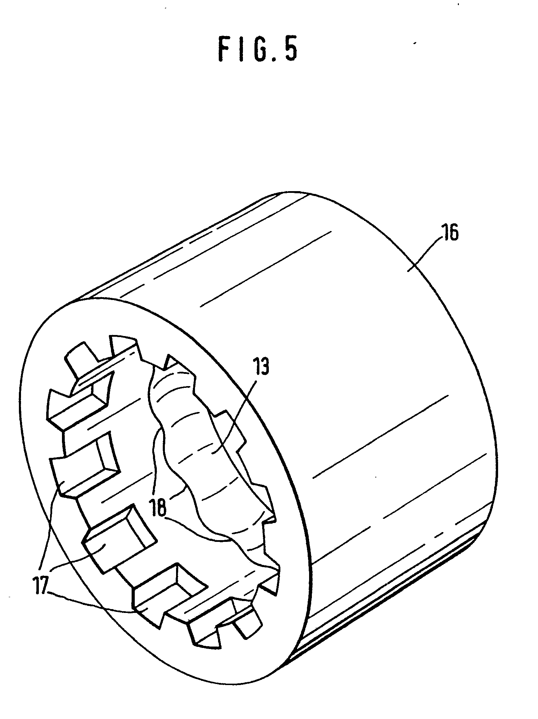

Die Fig. 5 zeigt eine fertige Kupplungsmuffe 16, die stirnseitig Ausnehmungen 17 in Art einer Verzahnung aufweist. Die in der Bohrung der Kupplungsmuffe 16 erkennbare umlaufende Vertiefung 13 läßt an ihrer den Ausnehmungen 17 zugewandten Begrenzungskante die Stellen 18 erkennen, an denen Werkstoff in die Vertiefung 13 hinein verdrängt wurde.

## Patentanspruch

Verfahren zur Herstellung einer an beiden Enden stirnseitig offenen Muffe (16), welche an einer Stirnseite wenigstens eine sich über einen Teil der axialen Länge der Muffe (16) erstreckende stirnseitig offene Ausnehmung (17) aufweist, aus einem zylindrischen Rohrabschnitt (6), bei dem

a)   der Rohrabschnitt (6) in den kreisringförmigen Hohlraum (5) eines Gesenkes (1) eingelegt wird, welcher Hohlraum (5) in seiner radialen Erstreckung größer als die Wanddicke des Rohrabschnittes (6) ist,

b)   der Rohrabschnitt (6) der axialen Druckeinwirkung eines Stempels (7) unterworfen wird, so daß er sich unter Ausbildung einer mittigen Ausbauchung (8) mit seinem Mittelteil (9) gegen die äußere (11), und mit seinen Endbereichen (10) gegen die innere Begrenzungswand (12) des Gesenkhohlraumes (5) anlegt,

c)   der Rohrabschnitt (6) unter weiterer Druckanwendung so gestaucht wird, daß er den Gesenkhohlraum (5) bis auf eine in der Mitte der Bohrung des Rohrabschnittes (6) umlaufende Vertiefung (13) ausfüllt und

d)   anschließend auf den gestauchten Rohrabschnitt (6) ein zweiter Stempel (14) einwirkt, der stirnseitig den Ausnehmungen entsprechende Profilierungen (15) aufweist, wobei der durch diese Profilierungen (15) verdrängte Werkstoff unter teilweiser Auffüllung der umlaufenden Vertiefung (13) des Rohrabschnittes (6) in diese eintritt.

## Claim

A method of producing a sleeve (16) which is open at the end face at both ends and which at one end face hat at least one recess (17) open at the end face and extending over part of the axial length of the sleeve (16), from a cylindrical tube length (6), wherein

a)   the tube length (6) is placed in the circular annular cavity (5) of a die (1), the radial extent of said cavity (5) being larger than the wall thickness of the tube length (6),

b)   the tube length (6) is subjected to the axial pressure of a punch (7) so that a middle bulge (8) is formed and its middle part (9) bears against the outer boundary wall (11) of the die cavity (5) while its end zones (10) bear against the inner boundary wall (12) of the die cavity (5),

c)   the tube length (6) is so upset by the further application of pressure that it fills the die cavity (5) except for a depression (13) extending around the centre of the bore of the tube length (6) and

d)   a second punch (14) then acts on the upset tube length (6), the end faces of said punch (14) having profilings (15) corresponding to the recesses, the material displaced by said profilings (15) entering the depression (13) extending around the tube length (6) and partially filling the same.

## Revendication

Procédé pour la fabrication d'un manchon (6) ouvert sur ses faces terminales à ses deux extrémités, comportant sur une face terminale au moins un évidement (17) débouchant sur cette face terminale, s'étendant sur une partie de la longueur axiale du manchon (16), à partir d'un tronçon de tube cylindrique (6), suivant lequel:

a)   on introduit le tronçon de tube (6) dans la cavité annulaire (5) d'une matrice (1), cette cavité (5) ayant, en ce qui concerne son étendue radiale, une dimension supérieure à l'épaisseur de paroi du tronçon de tube (6),

b)   on soumet le tronçon de tube (6) à l'effet de la pression axiale d'un poinçon (7), de sorte qu'il s'applique par sa partie médiane (9), en formant un bombement ou renflement médian vers l'extérieur (8), contre la paroi limite extérieure (11) de la cavité de la matrice (5), et par ses parties terminales (10) contre la paroi limite intérieure (12) de cette cavité (5),

c)   on soumet le tronçon de tube (6) à un refoulement en faisant intervenir à nouveau la pression, de façon telle qu'il remplisse la cavité (5) de la matrice, sauf en ce qui concerne une dépression circulaire (13) s'étendant au milieu de l'alésage du tronçon de tube (6), et

d)   on fait ensuite agir sur le tronçon de tube (6) ayant subi un refoulement, un second poinçon (14) qui comporte sur sa partie terminale des profilages (15) correspondant aux évidements, de sorte que la matière repoussée par ces profilages (15) pénètre dans la dépression circulaire (13) du tronçon de tube (6) en la remplissant partiellement.

FIG.1

FIG.2

FIG.3

FIG.4

# FIG.5

16

13

18

17